# EUROPEAN PATENT SPECIFICATION

(11) **EP 1 338 808 B1**
(45) Date of publication and mention of the grant of the patent: **27.10.2004**
(21) Application number: 02003270.2
(22) Date of filing: 21.02.2002
(51) Int. Cl.: F16B 47/00

(54) **Mounting sucker**
Haltevorrichtung mit Saugnapf
Dispositif de fixation avec ventouse

(43) Date of publication of application: 27.08.2003
(73) Proprietor: Free- Free Industrial Corp., Taipei (TW)
(72) Inventor: Mulholland, Ian, Andover, Hampshire SP10 5AW (GB)
(74) Representative: Casalonga, Axel

(56) References cited:
- WO-A-97/33096
- DE-C- 610 394
- GB-A- 470 723
- GB-A- 975 271

## Description

### 1. Field of the Invention

The present invention relates to a mounting sucker, and more particularly to a mounting sucker with a threaded device to increase suction force.

### 2. Description of Related Art

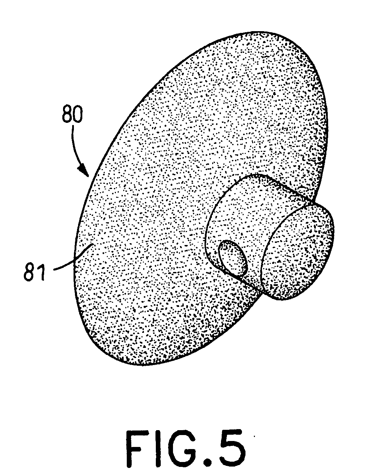

With reference to Fig. 5, in one known arrangement, a suction pad (80) is integrally formed with a fixing formation to which other structures, such as cabinets, shelves, towel hangers etc. can be attached. The suction pad (80) is typically made of a resilient material such as PVC and is slightly dome-shaped so that when the suction pad (80) is pressed into contact with smooth surfaces, its inherent resilience causes the central part to draw away from the smooth surfaces, thereby creating a partial vacuum between the suction pad (80) and the surface. Such a mounting means has a disadvantage in that only a limited amount of resilience can be built into the design so that only weak fixing force can be obtained.

A spring loaded mounting sucker, with a boss threadingly attached to the rim of an intermediate member, is known from GB-A-470 723.

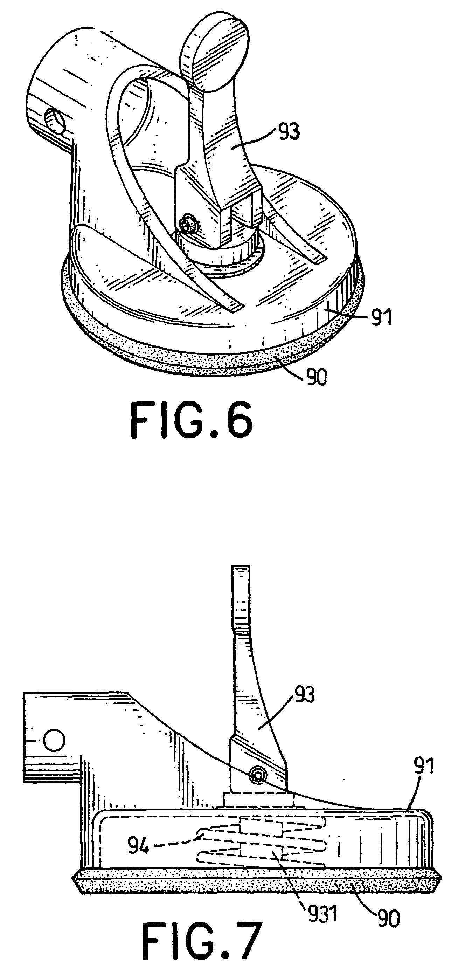

Another known mounting means, as shown in Figs. 6 and 7, comprises a suction pad (90) as described above which is actuated by a lever (93) and cam arrangement (94). One end of the lever (93) is attached to a pulling means (931) for drawing the suction pad (90) away from the wall. The pulling means (931) projects through an intermediate member, whose center is raised away from suction pad (90). The lever (93) has a fulcrum part which bears against the intermediate part. When the end of lever (93) is pressed down, the lever (93) rotates about the fulcrum and the pulling means (931) pulls the center of the suction pad (90) away from the smooth surface. This design has the additional advantage that the amount of the pull which can be obtained is not dependent upon the material of which suction pad (90) is made. Further, as the lever (93) presses the intermediate part down, the intermediate part forces the circumference of the suction pad (90) into closer contact with the smooth surface thereby giving a better seal.

There are, however, two problems with this known arrangement. In particular, the lever arrangement is complex to produce, relatively unsightly and may only be used to apply one level of force to the suction pad.

The present invention has arisen to mitigate and/or obviate the disadvantages of the conventional mounting means.

The main objective of the present invention is to provide a mounting sucker that is firmly securable on a smooth surface but easily operated.

Further benefits and advantages of the present invention will become apparent after a careful reading of the detailed description with appropriate reference to the accompanying drawings.

### IN THE DRAWINGS

Fig. 1 is an exploded perspective view of a mounting sucker in accordance with the present invention;
Fig. 2 is a side cross-sectional view of the mounting sucker when the mounting sucker is initially attached to a smooth surface;
Fig. 3 is a side cross-sectional view of the mounting sucker showing that the mounting sucker is secured on the smooth surface after operating a rotating boss;
Fig. 4 is a schematic perspective view of the mounting sucker applied to a soap rack;
Fig. 5 is a perspective view of a conventional mounting sucker;
Fig. 6 is a perspective view of another conventional mounting sucker which is operated by a lever; and
Fig. 7 is a side cross-sectional view of the conventional mounting sucker in accordance with Fig. 6.

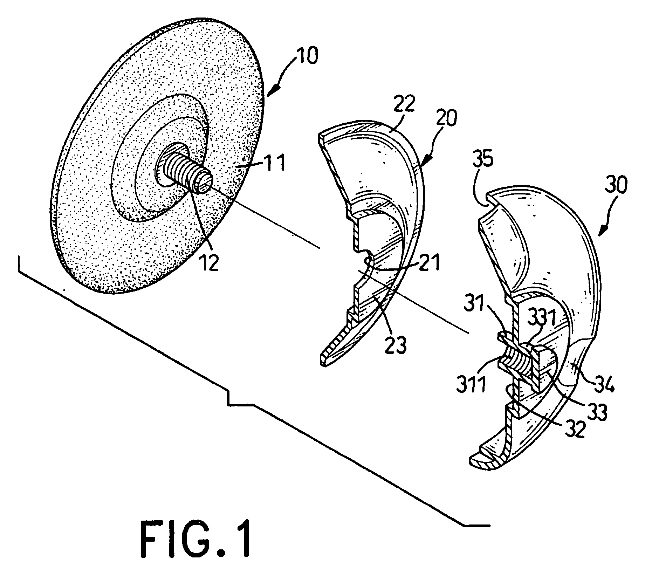

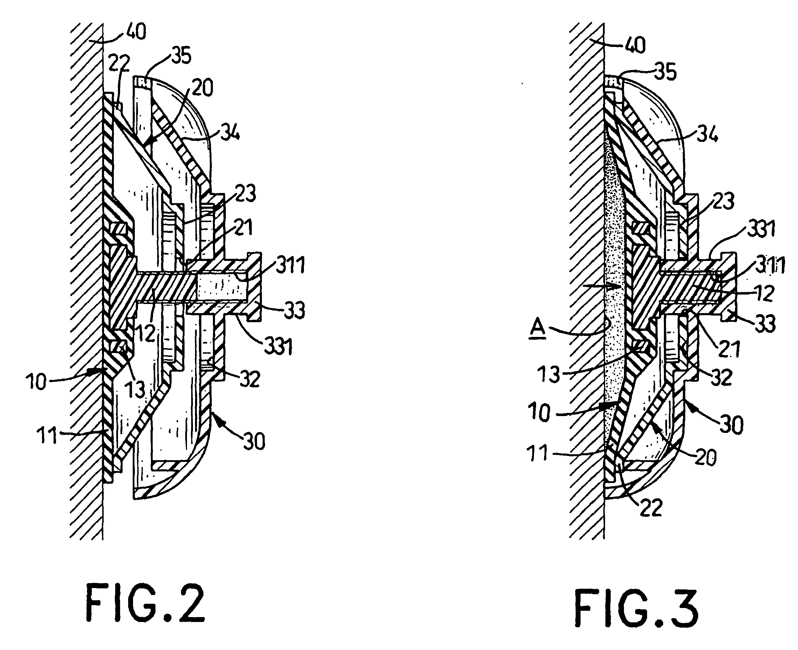

With reference to Figs. 1 and 2, a mounting sucker adapted to connect with hanging racks is composed of a suction devices (10), an intermediate member (20), and a rotating boss (30) for use with a smooth surface.

The suction devices (10) has a circular suction pad (11) made of soft flexible plastic material such as polyvinyl chloride (PVC) and a threaded projection (12) made of hard plastic material erected at the center of the suction pad (11). A plate (13) is secured at the root of the threaded projection (12) to provide a powerful connecting strength. The intermediate member (20) mounted on the suction devices (10) is a shallow dome substantially having substantially the same size as the suction pad (11) of the suction devices (10). The intermediate member (20) is made of hard plastic and has a bore (21) is formed in the center of the intermediate member (20). A pressing edge (22) is formed around the circumference of the intermediate member (20) and adapted to evenly press the suction pad (11). Additionally, an annular bearing zone (23) is shaped around the bore (21) to provide a regular compression to the suction pad (11) when the rotating boss (30) is turned as described later.

The rotating boss (30) is a dome made of hard plastic and caps the intermediate member (20) and the suction devices (10). A tube (31) with an open first end, a closed second end, and a screw thread bore (311) is formed in the center of the rotating boss (30). The first end of the tube (31) penetrates the bore (21) of the intermediate member (20) and receives the threaded projection (12) of the suction devices (10). An annular recess (32) is defined around the first end of the tube (31) and receives the bearing zone (23) of the intermediate member (20). A bushing head (33) with a neck (331) is formed on the closed second end of the tube (31) to connect with hanging racks (not shown). Multiple scalloped concavities (34) are defined in an outer surface of the rotating boss (30) to make mounting means to be turned easily. Multiple cutouts (35) are defined in the scalloped concavities (34) respectively so that a seal between the suction pad (11) and the smooth surface can be broken if necessary.

Figs. 2 and 3 show the mounting sucker in use. The suction pad (11) is placed in contact with a suitable surface (40) initially as shown in Fig. 2. The suction pad (11) is placed against the surface (40) and the rotating boss (30) is in a first position spaced away from the intermediate member (20) so that the mounting sucker is lightly attached to the surface (40). When the rotating boss (30) is turned by a user to move via the threaded engagement between the threaded projection (12) and the screw thread bore (311) to a second position wherein the rotating boss (30) is close to the intermediate member (20), a force from the rotating boss (30) is transferred to the intermediate member (20) through the annular bearing zone (23). Therefore, the pressing edge (22) of the intermediate member (20) presses the circumferential edge of the suction pad (11) to enhance the sealing efficiency.

In another aspect, the engagement of the threaded projection (12) and the tube (31) of the rotating boss (30) draws up the center of the suction pad (11) in the direction shown in the arrow. A partial vacuum space (A) (see Fig. 3) is spaced and attracts the mounting means by different atmosphere pressure between the space (A) and the outer surrounding whereby improving and prolonging the suction force.

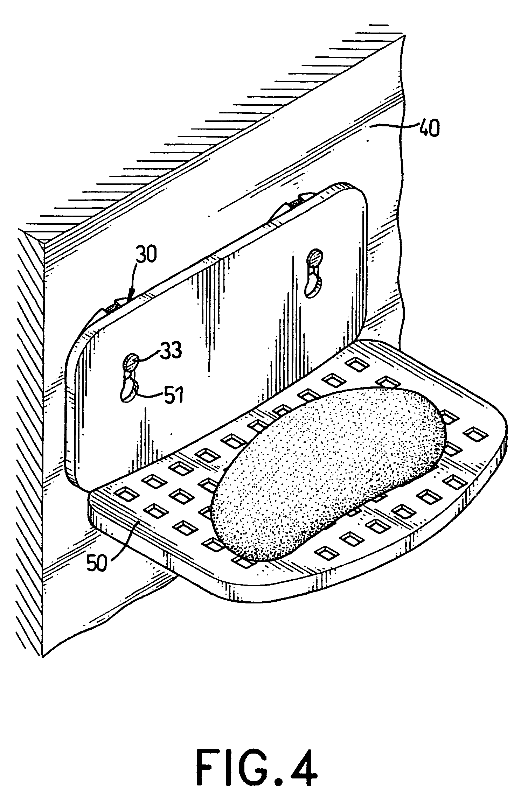

Now referring to Fig. 4, one embodiment shows a pair of the mounting suckers according to the present invention mounted on the smooth surface (40). A soap rack (50) is suspended by the bushing head (33) of the mounting means. When in position, the soap rack (50) extends for 10 cm or more from the smooth surface (40) in the horizontal direction. The rack comprises a pair of keyhole-shaped slots (51) and each slot (51) has a lower part of a diameter sufficiently large for passing over the largest diameter of the bushing head (33) of the rotating boss (30) and a narrow part having a width smaller than the largest diameter of the bushing head (33) but bigger than a width of the neck (331) of the bushing head (33). As a result, the slot (51) can be passed over the bushing head (33) until it comes to rest firmly held on the neck (331) of the bushing head (33), whereby the soap rack (50) is suspended on the smooth surface (40).

Additionally, the rotating boss (30) has an outer peripheral edge extending beyond an outer edge of the suction pad (11) of the suction devices (10) so that the outer periphery edge of the rotating boss (30) touches the smooth surface (40). Thus, particularly when the rack (50) is heavy due to soap therein, an oblique force from the rack which would other break the seal at the top of the suction pad (11) is countered by the contact of the periphery edge of the rotating boss (30) and the surface (40), whereby a twisting force from the suspended soap rack (50) with weighted soap is transmitted to the suction pad (11) and the seal is preserved. In this way, the breaking of the suction at the top can be avoided.

The mounting sucker of the present invention can be used for engagement with any suitable surface. Preferably, the surface is of the types found in kitchen and bathroom for example gloss painted surface, metal surfaces such as aluminum or steel, glass or glazed surface such as tiles, or plastic such as Perspex™ or PVC.

Although the invention has been explained in relation to its preferred embodiment, it is to be understood that many other possible modifications and variations can be made without departing from the scope of the invention as hereinafter claimed.

## Claims

1. A mounting sucker comprising:
a suction device (10) adapted for sealingly contacting a smooth surface (40), wherein the suction device (10) is composed of:
a suction pad (11) contacting the smooth surface; and
a threaded projection (12) erected on the suction pad (11);
an intermediate member (20) mounted on the suction device (10) and having a pressing edge (22) formed around the circumference of the intermediate member (20) to evenly press the suction pad (11) so as to make the suction device (10) firmly attach to the smooth surface; and
a rotating boss (30) adapted to connect with a hanging rack and capping the intermediate member (20) and the suction device (10), the rotating boss (30) having:
a tube (31) formed in the center of the rotating boss (30) to movably penetrate the intermediate member (20) and having a screw thread bore (311) to receive the threaded projection (12) of the suction device (10); and
a bushing head (33) formed outwardly on the rotating boss (30) to connect with other hanging racks;
wherein in a first position the intermediate member (20) is spaced away from the rotating boss (30) and the suction device (10) is in contact with the smooth surface (40), and in a second position the intermediate member (20) is drawn close to the rotating boss (30) and the suction device (10) is spaced away from the smooth surface so that a partial vacuum is created between the suction device (10) and the smooth surface for sealing attachment.

2. The mounting sucker as claimed in claim 1, wherein the rotating boss (30) is a shallow dome and has multiple scalloped concavities (34) defined in an outer surface of the rotating boss (30) to enable it to be turned easily.

3. The mounting sucker as claimed in claim 1, wherein the rotating boss (30) has multiple cutouts (35) defined in an outer surface of the rotating boss (30) so that the seal between the suction pad (11) and the smooth surface is broken easily if necessary.

4. The mounting sucker as claimed in claim 2, wherein the rotating boss (30) further comprises multiple cutouts (35) defined in distal ends of the scalloped concavities (34) respectively so that the seal between the suction pad (11) and the smooth surface is broken easily if necessary.

5. The mounting sucker as claimed in claim 1, wherein the intermediate member (20) further comprises an annular bearing zone (23) at a center of the intermediate member (20), the bearing zone (23) transfering an even compression force from the rotating boss (30) to the suction device (10) when the rotating boss (30) is screwed toward to the smooth surface (40).

6. The mounting sucker as claimed in claim 2, wherein the intermediate member (20) further comprises an annular bearing zone (23) at a center of the intermediate member (20), the bearing zone (23) transfering an even compression force from the rotating boss (30) to the suction device (10) when the rotating boss (30) is screwed toward to the smooth surface (40).

7. The mounting sucker as claimed in claim 3, wherein the intermediate member (20) further comprises an annular bearing zone (23) at a center of the intermediate member (20), the bearing zone (23) transfering an leven compression force from the rotating boss (30) to the suction device (10) when the rotating boss (30) is screwed toward to the smooth surface (40).

8. The mounting sucker as claimed in claim 1, wherein the suction device (10) further comprises a plate (13) secured at a root of the threaded projection (12) to provide a connecting strength between the suction pad (11) and the threaded projection (12) to avoid breakage therebetween.

9. The mounting sucker as claimed in claim 2, wherein the suction device (10) further comprises a plate (13) secured at the root of the threaded projection (12) to provide a powerful connecting strength between the suction pad (11) and the threaded projection (12) to avoid breakage therebetween.

10. The mounting sucker as claimed in claim 3, wherein the suction device (10) further comprises a plate (13) secured at a root of the threaded projection (12) to provide a connecting strength between the suction pad (11) and the threaded projection (12) to avoid breakage therebetween.

11. The mounting sucker as claimed in claim 5, wherein the suction device (10) further comprises a plate (13) secured at a root of the threaded projection (12) to provide a connecting strength between the suction pad (11) and the threaded projection (12) to avoid breakage therebetween.

## Patentansprüche

1. Eine Saugmontiervorrichtung umfassend:
eine Saugvorrichtung (10), dazu angepasst, um abdichtend in Kontakt mit einer glatten Oberfläche (40) zu sein, wobei die Saugvorrichtung (10) besteht aus:
einer Saugunterlage (11), die in Kontakt ist mit der glatten Oberfläche; und
ein auf der Saugunterlage (11) aufgerichteter und mit einem Gewinde versehener Vorsprung (12);
ein auf der Saugvorrichtung (10) montiertes Zwischenelement (20) mit einem Anpressrand (22) der um den Umfang des Zwischenelements (20) gebildet ist, um die Saugunterlage (11) gleichmäßig anzudrücken, so dass die Saugvorrichtung (10) fest auf der glatten Oberfläche befestigt ist; und
ein Drehknauf (30), dazu angepasst, um mit einem Hängegestell verbunden zu sein, und der das Zwischenelement (20) und die Saugvorrichtung (10) bedeckt, wobei der Drehknauf (30) aufweist:
eine Röhre (31), die in der Mitte des Drehknaufs (30) gebildet ist, um beweglich in das Zwischenelement (20) einzudringen, und die mit einer Schraubengewindebohrung (311) zum Aufnehmen des mit einem Gewinde versehenen Vorsprungs (12) der Saugvorrichtung (10) versehen ist; und
ein Durchführungshülsenkopf (33), der außen auf dem Drehknauf (30) zum Verbinden mit anderen Hängegestellen gebildet ist;
wobei in einer ersten Position das Zwischenelement (20) von dem Drehknauf (30) beabstandet und die Saugvorrichtung (10) in Kontakt mit der glatten Oberfläche (40) ist, und in einer zweiten Position das Zwischenelement (20) dicht an den Drehknauf (30) herangezogen und die Saugvorrichtung (10) von der glatten Oberfläche beabstandet ist, so dass zwischen der Saugvorrichtung (10) und der glatten Oberfläche ein Teilvakuum für eine abdichtende Befestigung erzeugt wird.

2. Die Saugmontiervorrichtung nach Anspruch 1, wobei der Drehknauf (30) eine flache Koppel ist und mehrere muschelförmige Aushöhlungen (34) aufweist, die in einer äußeren Oberfläche des Drehknaufs (30) definiert sind, um zu ermöglichen, dass dieser einfach gedreht werden kann.

3. Die Saugmontiervorrichtung wie in Anspruch 1 beansprucht, wobei der Drehknauf (30) mehrere Ausschnitte (35) aufweist, die in einer äußeren Oberfläche des Drehknaufs (30) definiert sind, so dass die Abdichtung zwischen der Saugunterlage (11) und der glatten Oberfläche, falls notwendig, einfach aufgebrochen werden kann.

4. Das Saugmontiergerät nach Anspruch 2, wobei der Drehknauf (30) ferner mehrere Ausschnitte (35) umfasst, die an äußeren Enden der muschelförmigen Aushöhlungen (34) gebildet sind, so dass die Abdichtung zwischen der Saugunterlage (11) und der glatten Oberfläche, falls notwendig, einfach aufgebrochen werden kann.

5. Die Saugmontiervorrichtung nach Anspruch 1, wobei das Zwischenelement (20) ferner einen ringförmigen Niederdrückbereich (23) in einer Mitte des Zwischenelements (20) umfasst, wobei der Niederdrückbereich (23) eine ebene Kompressionskraft von dem Drehknauf (30) auf die Saugvorrichtung (10) überträgt, wenn der Drehknauf (30) zu der glatten Oberfläche (40) hin geschraubt wird.

6. Die Saugmontiervorrichtung nach Anspruch 2, wobei das Zwischenelement (20) ferner einen ringförmigen Niederdrückbereich (23) in einer Mitte des Zwischenelements (20) umfasst, wobei der Niederdrückbereich (23) eine ebene Kompressionskraft von dem Drehknauf (30) auf die Saugvorrichtung (10) überträgt, wenn der Drehknauf (30) zu der glatten Oberfläche (40) hin geschraubt wird.

7. Die Saugmontiervorrichtung nach Anspruch 3, wobei das Zwischenelement (20) ferner einen ringförmigen Niederdrückbereich (23) in einer Mitte des Zwischenelements (20) umfasst, wobei der Niederdrückbereich (23) eine ebene Kompressionskraft von dem Drehknauf (30) auf die Saugvorrichtung (10) überträgt, wenn der Drehknauf (30) zu der glatte Oberfläche (40) hin geschraubt wird.

8. Die Saugmontiervorrichtung nach Anspruch 1, wobei die Saugvorrichtung (10) ferner eine Platte (13) umfasst, die an einer Wurzel des mit einem Gewinde versehenen Vorsprungs (12) befestigt ist, um eine Verbindungsfestigkeit zwischen der Saugunterlage (11) und dem mit einem Gewinde versehenen Vorsprung (12) bereitzustellen, um ein Auseinanderbrechen zwischen diesen zu vermeiden.

9. Das Saugmontiergerät wie in Anspruch 2 beansprucht, wobei die Saugvorrichtung (10) ferner eine Platte (13) umfasst, die an der Wurzel des mit einem Gewinde versehenen Vorsprungs (12) befestigt ist, um eine kraftvolle Verbindungsfestigkeit zwischen der Saugunterlage (11) und dem mit einem Gewinde versehenen Vorsprung (12) bereitzustellen, um ein Auseinanderbrechen zwischen diesen zu vermeiden.

10. Die Saugmontiervorrichtung nach Anspruch 3, wobei die Saugvorrichtung (10) ferner eine Platte (13) umfasst, die an einer Wurzel des mit einem Gewinde versehenen Vorsprungs (12) befestigt ist, um eine Verbindungsfestigkeit zwischen der Saugunterlage (11) und dem mit einem Gewinde versehenen Vorsprung (12) bereitzustellen, um ein Auseinanderbrechen zwischen diesen zu vermeiden.

11. Das Saugmontiergerät wie in Anspruch 5 beansprucht, wobei die Saugvorrichtung (10) ferner eine Platte (13) umfasst, die an einer Wurzel des mit einem Gewinde versehenen Vorsprungs (12) befestigt ist, um eine Verbindungsfestigkeit zwischen der Saugunterlage (11) und dem mit einem Gewinde versehenen Vorsprung (12) bereitzustellen, um ein Auseinanderbrechen zwischen diesen zu vermeiden.

## Revendications

1. Ventouse de fixation comprenant :
un dispositif de succion (10) adapté pour établir un contact étanche avec une surface lisse (40), le dispositif de succion (10) étant composé :
d'un tampon de succion (11) en contact avec la surface lisse ; et
d'une protubérance filetée (12) se dressant sur le tampon de succion (11) ;
un élément intermédiaire (20) monté sur le dispositif de succion (10) et comportant un bord de pressage (22) formé autour de la circonférence de l'élément intermédiaire (20) pour presser de façon uniforme le tampon de succion (11) afin de faire adhérer fermement le dispositif de succion (10) à la surface lisse ; et
un bouton rotatif (30) adapté pour se connecter à un support suspendu et coiffant l'élément intermédiaire (20) et le dispositif de succion (10), le bouton rotatif (30) comportant :
un tube (31) formé au centre du bouton rotatif (30), destiné à pénétrer dans l'élément intermédiaire (20) et ayant un trou fileté (311) pour recevoir la protubérance filetée (12) du dispositif de succion (10) ; et
une tête de douille (33) formée vers l'extérieur sur le bouton rotatif (30) pour se connecter à d'autres supports suspendus ;
dans lequel, dans une première position, l'élément intermédiaire (20) est espacé par rapport au bouton rotatif (30) et le dispositif de succion (10) est en contact avec la surface lisse (40), et dans une deuxième position, l'élément intermédiaire (20) est étroitement rapproché du bouton rotatif (30) et le dispositif de succion (10) est écarté de la surface lisse, de sorte qu'un vide partiel est créé entre le dispositif de succion (10) et la surface lisse pour réaliser une fixation étanche.

2. Ventouse de fixation selon la revendication 1, dans laquelle le bouton rotatif (30) est un dôme creux et comporte plusieurs concavités découpées (34) définies dans une surface extérieure du bouton rotatif (30) pour permettre de le faire tourner facilement.

3. Ventouse de fixation selon la revendication 1, dans laquelle le bouton rotatif (30) comporte plusieurs entailles (35) définies dans une surface extérieure du bouton rotatif (30) afin que l'adhérence entre le tampon de succion (11) et la surface lisse puisse être rompue aisément si nécessaire.

4. Ventouse de fixation selon la revendication 2, dans laquelle le bouton rotatif (30) comprend en outre plusieurs entailles (35) définies respectivement dans les extrémités distales des concavités découpées (34) afin que l'adhérence entre le tampon de succion (11) et la surface lisse puisse être rompue aisément si nécessaire.

5. Ventouse de fixation selon la revendication 1, dans laquelle l'élément intermédiaire (20) comprend en outre une zone d'appui annulaire (23) au centre de l'élément intermédiaire (20), la zone d'appui (23) transférant une force de compression homogène du bouton rotatif (30) au dispositif de succion (10) lorsque l'on visse le bouton rotatif (30) vers la surface lisse (40).

6. Ventouse de fixation selon la revendication 2, dans laquelle l'élément intermédiaire (20) comprend en outre une zone d'appui annulaire (23) au centre de l'élément intermédiaire (20), la zone d'appui (23) transférant une force de compression homogène du bouton rotatif (30) au dispositif de succion (10) lorsque l'on visse le bouton rotatif (30) vers la surface lisse (40).

7. Ventouse de fixation selon la revendication 3, dans laquelle l'élément intermédiaire (20) comprend en outre une zone d'appui annulaire (23) au centre de l'élément intermédiaire (20), la zone d'appui (23) transférant une force de compression homogène du bouton rotatif (30) au dispositif de succion (10) lorsque l'on visse le bouton rotatif (30) vers la surface lisse (40).

8. Ventouse de fixation selon la revendication 1, dans laquelle le dispositif de succion (10) comprend en outre une plaque (13) fixée à la base de la protubérance filetée (12) pour apporter une résistance de connexion entre le tampon de succion (11) et la protubérance filetée (12) afin d'éviter une rupture entre eux.

9. Ventouse de fixation selon la revendication 2, dans laquelle le dispositif de succion (10) comprend en outre une plaque (13) fixée à la base de la protubérance filetée (12) pour apporter une grande résistance de connexion entre le tampon de succion (11) et la protubérance filetée (12) afin d'éviter une rupture entre eux.

10. Ventouse de fixation selon la revendication 3, dans laquelle le dispositif de succion (10) comprend en outre une plaque (13) fixée à la base de la protubérance filetée (12) pour apporter une résistance de connexion entre le tampon de succion (11) et la protubérance filetée (12) afin d'éviter une rupture entre eux.

11. Ventouse de fixation selon la revendication 5, dans laquelle le dispositif de succion (10) comprend en outre une plaque (13) fixée à la base de la protubérance filetée (12) pour apporter une résistance de connexion entre le tampon de succion (11) et la protubérance filetée (12) afin d'éviter une rupture entre eux.
